# EUROPÄISCHE PATENTANMELDUNG

(11) **EP 3 040 240 A1**
(43) Veröffentlichungstag der Anmeldung: **06.07.2016**
(21) Anmeldenummer: 15466024.5
(22) Anmeldetag: 22.12.2015
(51) Int. Cl.: B60Q 1/20, B60Q 1/068

(54) **NEBELSCHEINWERFER EINES KRAFTFAHRZEUGES**

(30) Priorität: 30.12.2014 CZ 20140968
(71) Anmelder: Skoda Auto a.s., 29301 Mladá Boleslav (CZ)
(72) Erfinder: Zdenêk, Jasiok, CZ-29301 Mladá Boleslav (CZ)

(57) **Zusammenfassung**

Nebelscheinwerfer (1) eines Kraftfahrzeuges bestehend aus einem Gehäuse (2), in dem ein Rahmen (3) und Reflektor (4) mit einer Öffnung (8) und einer Lichtquelle (16) angeordnet sind, der ferner einen Halter (9) und eine Stellschraube (17) umfasst und wo der Rahmen (3) mit Reflektor (4) ein statisch angeordnetes Element bildet, wobei die Lichtquelle (16) in der Öffnung (8) des Reflektors (4) gegenüber diesem statischen Element verstellbar angeordnet ist.

## Beschreibung

### Technisches Gebiet

Die Erfindung betrifft ein Nebelscheinwerfer eines Kraftfahrzeuges, insbesondere eines Nebelscheinwerfers mit einstellbarer Lichtquelle.

### Bisheriger Stand der Technik

Kraftfahrzeuge werden derzeit neben Hauptscheinwerfern auch mit Nebelscheinwerfern ausgestattet, die während der Fahrt des Fahrzeuges bei eingeschränkten Sichtverhältnissen genutzt werden. Gemäß den gesetzlichen Vorgaben sollen die Nebelscheinwerfer so konstruiert werden, dass sie eine Einstellung der Neigung des ausgestrahlten Lichtstrahls im Bereich von ±3° ermöglichen. Bei üblich bekannten Lösungen wird dies dadurch erreicht, dass das Gehäuse des Nebelscheinwerfers als Gesamtheit um die Querachse gegenüber der Fahrtrichtung des Fahrzeuges verstellbar ist, wie z.B. der Patentdokument WO 2004/067319 A1 zu entnehmen ist. Aus der Patentdokument EP 1127741 B1 ist eine Lösung bekannt, in der mittels einer Stellstange der Reflektor im Scheinwerfergehäuse verstellt wird. Der Nachteil der genannten Lösung liegt darin, dass die Kanten des Reflektors sichtbar sind, was in Bezug auf Design des Frontendes des Kraftfahrzeuges störend wirkt.

### Darstellung der Erfindung

Die Aufgabe wird durch einen Nebelscheinwerfer eines Kraftfahrzeuges gelöst, der aus einem Gehäuse besteht, in dem ein Rahmen und ein Reflektor mit Öffnung und Lichtquelle angeordnet sind, und ferner einen Halter und eine Stellschraube umfasst. Die Darstellung der Erfindung liegt darin, dass der Rahmen mit dem Reflektor ein statisch angeordnetes Element bildet, wobei die in der Öffnung des Reflektors angeordnete Lichtquelle gegenüber diesem statischen Element verstellbar angeordnet ist.

Die verstellbare Anordnung der Lichtquelle wird so eingerichtet, dass die Lichtquelle fest in einem Halter gelagert ist, der im Gehäuse um die Achse y verschwenkbar angeordnet und mit einer Stellschraube verbunden ist.

Der Halter zur Befestigung der Lichtquelle besteht aus einer Basis mit einer Halteöffnung, die eine Einfassung aufweist, und bei dem an der Basis die Befestigungsbolzen und ein Schenkel angeordnet sind.

### Übersicht der Figuren der Zeichnungen

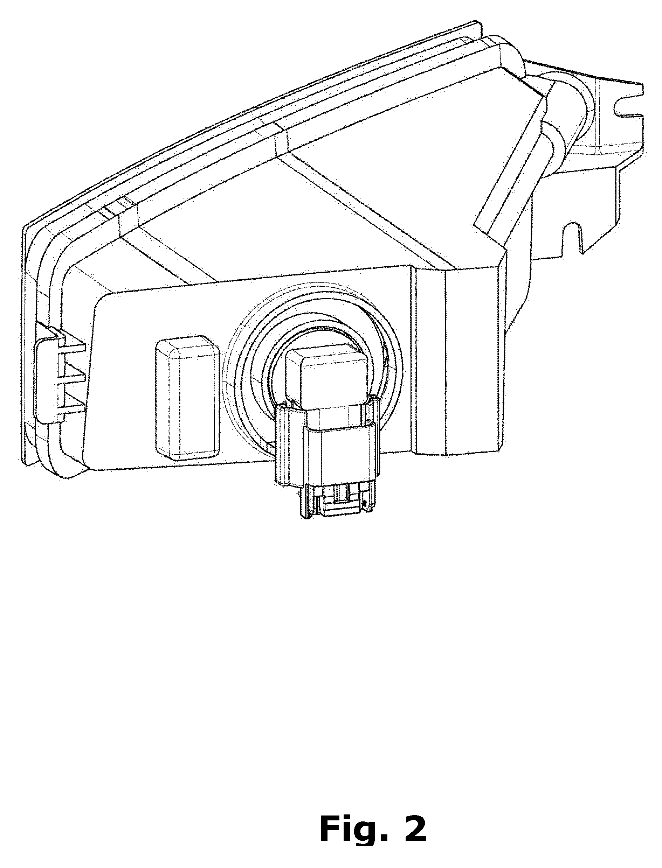

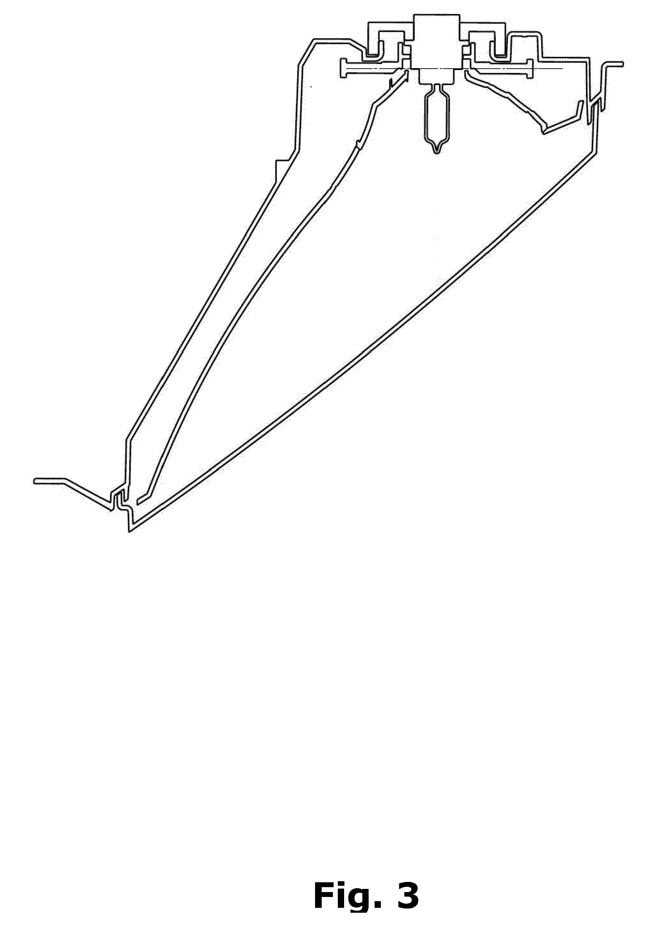

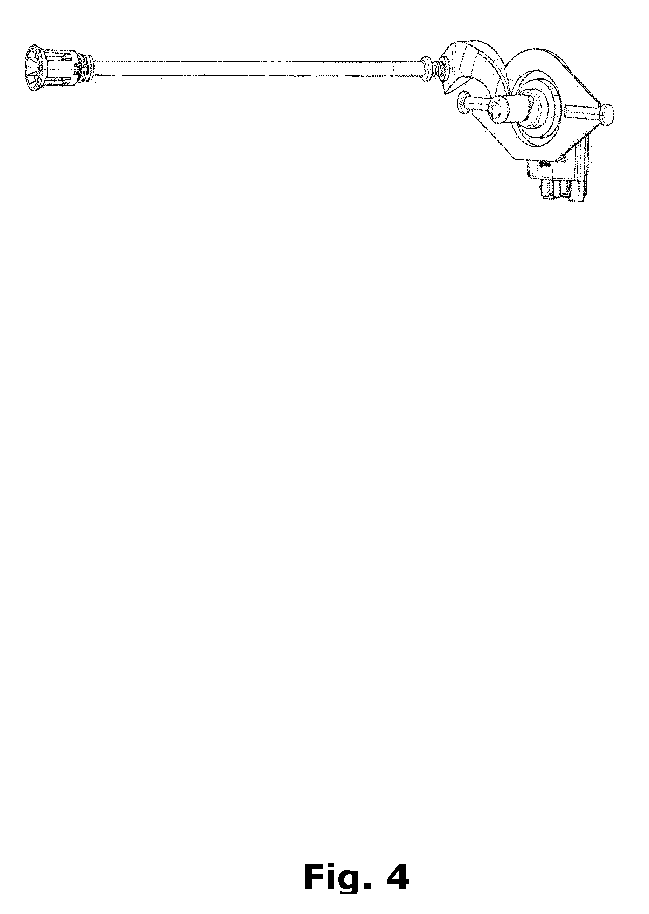

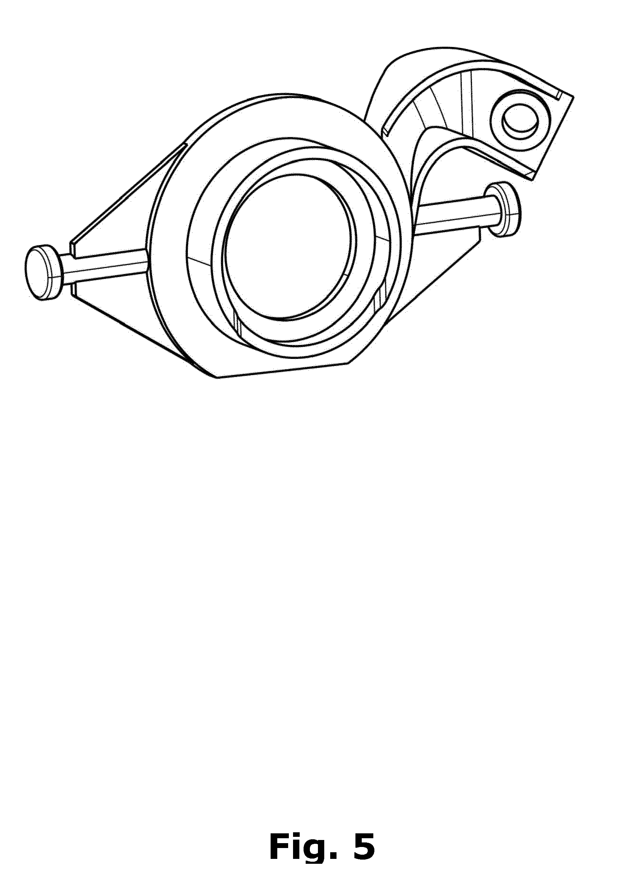

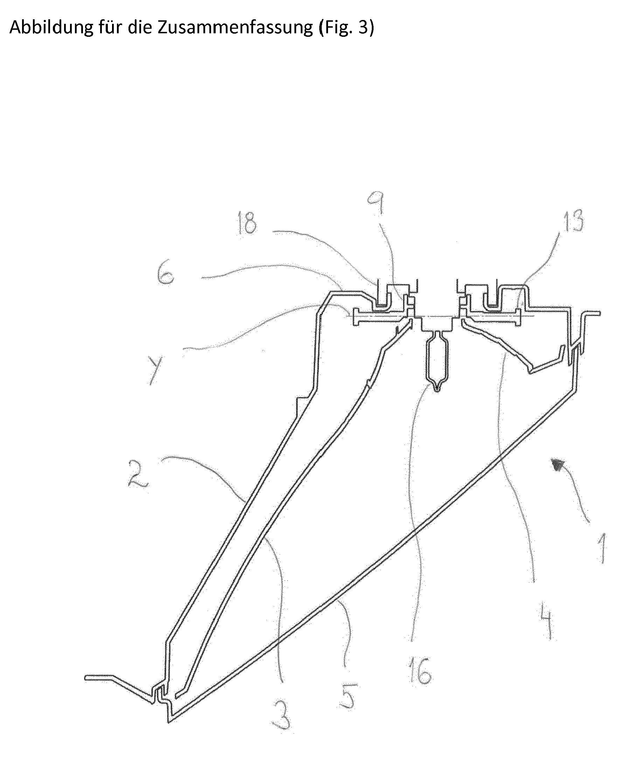

Die Erfindung wird anhand der Ausführungsbeispiele gemäß den beigefügten Zeichnungen näher erläutert, in denen zeigen die Fig. 1 eine perspektivische Ansicht des Nebelscheinwerfers, die Fig. 2 eine perspektivische Ansicht des Rückwandbereiches des Nebelscheinwerfers, die Fig. 3 den Nebelscheinwerfer in einer Schnittansicht, die Fig. 4 eine perspektivische Ansicht des Halters mit der Lichtquelle und die Fig. 5 eine perspektivische Ansicht des eigentlichen Halters.

### Ausführungsbeispiel der Erfindung

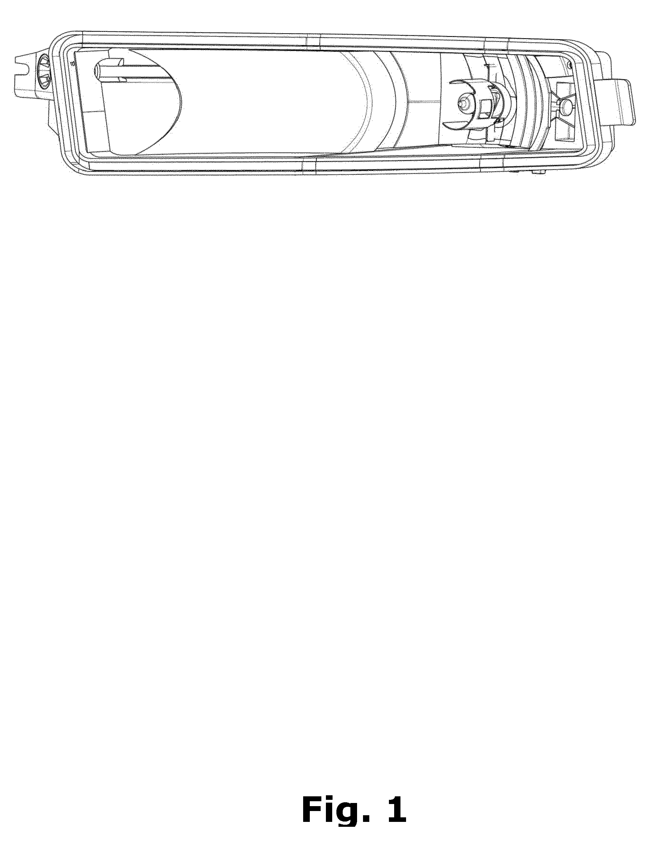

Wie der Fig. 1 zu entnehmen ist, besteht ein Nebelscheinwerfer 1 eines Kraftfahrzeuges aus einem Gehäuse 2, in dem ein Rahmen 3 und Reflektor 4 angeordnet sind, die ein statisch angeordnetes Element bilden. Das Gehäuse 2 ist mit einer durchsichtigen Abschlussscheibe 5 geschlossen. An der Innenseite einer Rückwand 6 des Gehäuses 2 sind Befestigungselemente 7 angeordnet. Die Rückwand 6 des Gehäuses 2 weist eine Öffnung 8 auf. Der Nebelscheinwerfer 1 umfasst ferner einen Halter 9, der durch eine Basis 10 mit Halteöffnung 11, die eine Einfassung 12 aufweist, gebildet wird, und an dem Halter 9 sind Befestigungsbolzen 13 und ein Schenkel 14 angeordnet, der ein Innengewinde 15 aufweist. In der Halteöffnung 11 der Einfassung 12 des Halters 9 ist (über Drehrastfassung) eine Lichtquelle 16 befestigt. Auf die Basis 10 und Einfassung 12 ist eine Dichtkappe 18 aufgesetzt. Der Nebelscheinwerfer 1 umfasst weiter eine Stellschraube 17, die an einem Ende schwenkbar im Gehäuse 2 angeordnet und an dem zweiten Ende mit Gewinde in das Innengewinde 15 des Schenkels 14 des Halters 9 eingeschraubt ist. Gegenüber dem Gehäuse 2 ist eine Stellschraube 17 auf üblich bekannte Art abgedichtet.

Im eingebauten Zustand des Nebelscheinwerfers 1 im Fahrzeug ist die Lichtquelle 16 auf dem Halter 9 aufgesetzt, der um die Achse y schwenkbar und am Gehäuse 2 angeordnet und über den Schenkel 14 mit der Stellschraube 17 verbunden ist. Durch deren Drehung im oder gegen den Uhrzeigersinn wird die geforderte Ausrichtung des Halters 9 und der im Gehäuse befestigten Lichtquelle 16 vorgenommen und dadurch auch die Stellung des Nebelscheinwerfers 1 eingestellt.

### Bezugszeichenliste

- 1.: Nebelscheinwerfer
- 2.: Reflektorgehäuse
- 3.: Rahmen
- 4.: Reflektor
- 5.: Abschlussscheibe
- 6.: Rückwand
- 7.: Befestigungselement
- 8.: Öffnung
- 9.: Halter
- 10.: Basis
- 11.: Halteöffnung
- 12.: Einfassung
- 13.: Befestigungsbolzen
- 14.: Schenkel
- 15.: Innengewinde
- 16.: Lichtquelle
- 17.: Stellschraube
- 18.: Dichtkappe
- y: Achse

## Patentansprüche

1. Nebelscheinwerfer (1) eines Kraftfahrzeuges bestehend aus einem Gehäuse (2), in dem ein Rahmen (3) und Reflektor (4) mit einer Öffnung (8) und einer Lichtquelle (16) angeordnet sind, der ferner einen Halter (9) und eine Stellschraube (17) umfasst, **dadurch gekennzeichnet, dass** der Rahmen (3) mit Reflektor (4) ein statisch angeordnetes Element bildet, wobei die Lichtquelle (16) in der Öffnung (8) des Reflektors (4) gegenüber diesem statischen Element verstellbar angeordnet ist.

2. Nebelscheinwerfer (1) eines Kraftfahrzeuges nach Anspruch 1 **dadurch gekennzeichnet, dass** die Lichtquelle (16) in einem Halter (9) fest gelagert ist, der im Gehäuse (2) um die Achse (y) schwenkbar angeordnet ist, wobei dieser Halter (9) mit der Stellschraube (17) verbunden ist.

3. Nebelscheinwerfer (1) eines Kraftfahrzeuges nach Anspruch 2 **dadurch gekennzeichnet, dass** der Halter (9) durch eine Basis (10) mit Halteöffnung (11), die eine Einfassung (12) aufweist, gebildet wird und dass an der Basis (10) Befestigungsbolzen (13) und ein Schenkel (14) angeordnet sind.
